# FASCICULE DE BREVET EUROPEEN

(11) **EP 0 515 239 B1**
(45) Date de publication et mention de la délivrance du brevet: **12.06.1996**
(21) Numéro de dépôt: 92401232.1
(22) Date de dépôt: 30.04.1992
(51) Int. Cl.: C04B 41/90, C04B 41/88, B22F 1/00

(54) **Procédé de réalisation d'un revêtement métallique sur une pièce en matériau composite SiC/SiC**
Verfahren zur Herstellung einer metallischen Beschichtung auf einem Verbundkörper SiC/SiC
Method of making a metallic coating on a ceramic composite SiC/SiC

(30) Priorité: 03.05.1991 FR 9105446
(43) Date de publication de la demande: 25.11.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lagain, Georges Laurent, F-77380 Combs La Ville (FR); Sohier, Bernard Philippe Cornil, F-77176 Savigny Le Temple (FR); Varela, Danilo, F-92310 Sevres (FR)

(56) Documents cités:
- EP-A- 0 396 146
- FR-A- 1 229 098
- FR-A- 1 500 503
- FR-A- 2 026 268
- US-A- 4 411 960
- US-A- 4 957 561
- CHEMICAL ABSTRACTS, vol. 111, no. 6, 18 septembre 1989, Columbus, OH (US); p. 292, no. 101871a
- PATENT ABSTRACTS OF JAPAN, vol. 14, no. 68 (C-686)[4011], 8 février 1990

## Description

La présente invention concerne un procédé de réalisation d'un revêtement métallique sur une pièce en matériau composite à matrice céramique. Elle concerne également la pièce ainsi obtenue comportant une structure superficielle remarquable ainsi que la composition de poudre en alliage métallique destinée à la formation dudit revêtement.

L'utilisation des matériaux composites notamment du type fibreux à matrice céramique dont les qualités ont par ailleurs été reconnues, notamment pour leurs propriétés de résistance aux hautes températures ou les gains de masse qu'ils procurent se trouve toutefois limitée dans certaines applications par suite de certains défauts de caractéristiques de surface. Des besoins d'amélioration de ces caractéristiques sont ainsi apparus, notamment en ce qui concerne leur résistance à l'usure par frottement ou par érosion, leur résistance à l'oxydation ou à la corrosion ou une amélioration de l'état de surface et notamment de la rugosité. Dans certaines conditions d'utilisation des insuffisances apparaissent également entraînant une décohésion des fibres, notamment sur les contours des pièces.

Quelques tentatives de solutions ont été proposées comme la réalisation de dépôts par projection à la flamme ou par plasma d'arc. La mise en oeuvre de ces techniques rencontre par contre fréquemment des difficultés du fait de l'insuffisance de l'adhérence des dépôts obtenus. La qualité d'accrochage obtenue est insuffisante et les phénomènes de contraintes dues aux dilatations différentielles entraînent des décohésions.

Divers procédés de revêtement, notamment dans le cas où une résistance à l'érosion et à la corrosion pour des pièces soumises à de hautes températures d'utilisation est recherchée, ont également été envisagés par FR-A-2 329 402, notamment l'application d'une couche protectrice sur un substrat constitué par un treillis métallique à plusieurs couches brasé sur l'âme de la pièce.

US-A-4.411.960 décrit une pièce à substrat céramique ou métallique revêtu d'une couche externe composé de nickel, cuivre et un composé de titane, carbure, nitrure, carbonitrure ou leurs mélanges et d'une couche interne composée de nickel, cuivre et titane, obtenues en appliquant une composition d'alliage de brasage et un traitement au four. La couche externe peut être composée de cuivre, borure de nickel et borure de titane.
FR-A-1.229.098 décrit un procédé de métallisation de surfaces céramiques par un revêtement comportant Mo ou W avec un liant contenant Ti ou Zr obtenu par enduction puis chauffage.
On connaît par ailleurs par EP-A-0.095.668 l'utilisation de Si ou B comme fondant dans une composition par mélange de deux poudres destinée à la réparation de pièces en superalliage.

Une amélioration remarquable des résultats est obtenue par un procédé de réalisation d'un revêtement métallique sur une pièce en matériau composite comprenant des fibres SiC dans une matrice céramique à base de SiC comportant les étapes suivantes :
a) Mélange d'une poudre A de base, présentant la composition nominale suivante en pourcentages pondéraux :
   Ni 53, Cr 14, Cu 20, Si 8, Ti 5,
   une granulométrie comprise entre 40 et 50 µm et une température de liquidus de 1150°C, et d'une poudre B d'apport, présentant la composition nominale suivante en pourcentages pondéraux :
   Cr 25, Ni 11, W 8 et Co complément à 100,
   et une granulométrie comprise entre 50 et 150µm, la proportion pondérale de poudre B étant de 25 %, au moyen d'un liant organique connu en soi de manière à obtenir une pâte ;
b) nettoyage de la surface de la pièce à revêtir ;
c) mise en place de ladite pâte préparée à l'étape a) ;
d) chauffage au four, soit sous vide, soit sous atmosphère contrôlée, par montée à une température de 1230°C, cette température étant au moins égale à la température du liquidus de la poudre A et restant inférieure à la température de liquidus de la poudre B, suivie d'un maintien en palier à cette température durant un temps réduit, inférieur à 15 minutes puis refroidissement, de manière à obtenir un revêtement métallique comprenant une première couche de liaison imprégnant une épaisseur E du matériau composite céramique et d'une deuxième couche externe en continuité avec la première et comportant des grains issus de la poudre B, ladite épaisseur E étant de 1 à 4 fois l'épaisseur de la couche externe.

Les caractéristiques et avantages de l'invention seront mieux compris à la lecture de la description qui va suivre d'un exemple de réalisation et en référence aux dessins annexés sur lesquels :
- la figure 1 représente une vue partielle suivant une coupe par un plan perpendiculaire à sa surface, d'une pièce sur la surface de laquelle le dépôt a été mis en place avant chauffage ;
- la figure 2 représente selon une vue analogue à celle de la figure 1 la même pièce après chauffage.

L'invention s'applique à des pièces 1 en matériaux composites à matrice céramique. Un revêtement métallique protecteur a été réalisé sur un volet constituant une pièce mobile de tuyère de turboréacteur dont le matériau composite est composé de fibres Sic dans une matrice Sic. Pour cela, une pâte 2 est obtenue en mélangeant au moyen d'un liant organique connu en soi deux poudres d'alliages métalliques :
- une poudre A de base, de composition nominale en pourcentages pondéraux :
   Ni53, Cr14, Cu 20, Si 8, Ti 5
- une poudre B d'apport, de composition nominale pondérale suivante :
   Gr 25, Ni 11, W 8 et Co complément à 100.

La proportion de poudre B est dans un rapport pondéral de 25%.

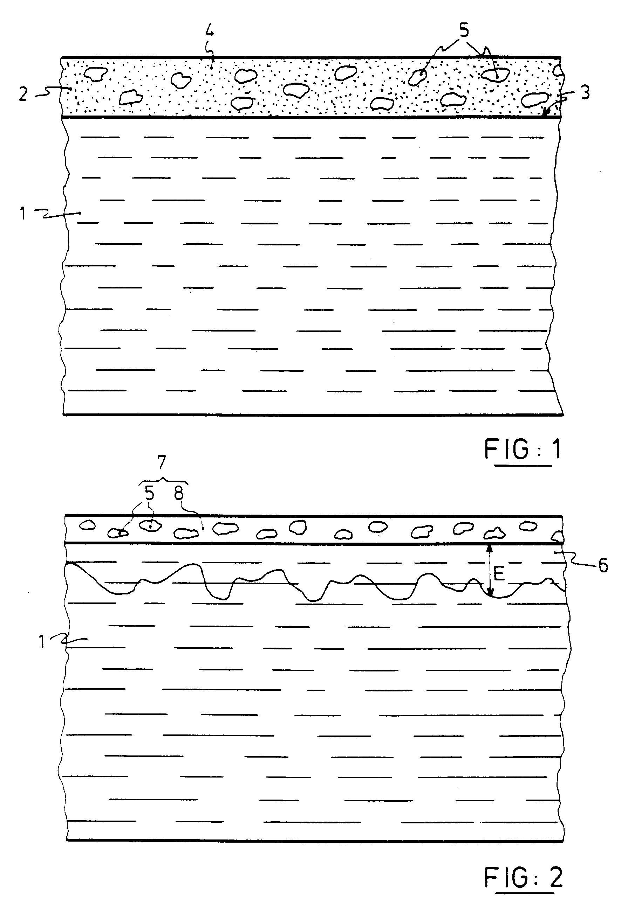

Les poudres utilisées ont les granulométries suivantes :
- pour la poudre A, entre 40 et 50 µm
- pour la poudre B, entre 50 et 150 µm
Après nettoyage de la surface de la pièce 1 représentée sur la figure 1, ladite pâte 2 est appliquée sur la surface 3 de pièce.

Le schéma de la figure 1 montre la structure présente avant chauffage de la pièce :
- des grains plus gros 5 proviennent de la poudre B d'apport ; le choix effectué dans l'exemple représenté de la composition de la poudre B répond à la recherche de propriétés anti-usure du revêtement à obtenir ;
- des grains plus fins 4 proviennent de la poudre A de base.

Quelle que soit l'application envisagée, les propriétés particulières de surface recherchées sont obtenues par le choix de l'alliage de la poudre B d'apport avec notamment présence de Co pour des propriétés anti-usure et présence de Cr et Al pour des propriétés de résistance à l'oxydation.

La poudre A de base définie ci-dessus présente une température de liquidus de 1150°C. Dans tous les cas, au moins un élément fondant tel que bore ou silicium est présent dans ladite poudre A de manière à assurer l'apparition d'une phase liquide lorsque le mélange est porté à une température comprise entre 1000°C et 1300°C. La poudre A comporte également des éléments tels que titane et/ou zirconium de manière à assurer la présence de ces éléments réactifs dans ladite phase liquide pour réaliser une réaction métallurgique avec le matériau céramique. La teneur pondérale en élément réactif peut varier de 2 à 5% dans la poudre A. Le choix des compositions respectives des poudres A et B est également tel que la température de liquidus de la poudre B est supérieure à celle de la poudre A. Le rapport pondéral de poudre B d'apport peut varier de 5 à 30%, en fonction des applications particulières.

La pièce 1 revêtue de ladite pâte 2 est ensuite chauffée au four puis refroidie. Dans la présente application, le chauffage est réalisé en four sous vide et un palier de maintien en température est réalisé durant dix minutes à 1230°C. Suivant les applications, une atmosphère contrôlée peut être réalisée dans le four. Dans tous les cas, une température au moins égale à la température du liquidus de la poudre A doit être atteinte mais elle doit rester inférieure à la température de liquidus de la poudre B. Un temps réduit de maintien en palier à la température maximale doit dans tous les cas être respecté. Ce temps sera inférieur à 15 minutes. Cette exigence vise à réduire les phénomènes de diffusion et/ou de dissolution qui risqueraient de se produire en cas de maintien prolongé, d'une part, entre la phase liquide obtenue et le matériau céramique de la pièce 1 et d'autre part, entre ladite phase liquide et les éléments d'alliages provenant de la poudre B d'apport. Ces phénomènes de diffusion et de dissolution indésirés notamment par les phénomènes de fragilisation qu'ils induiraient sont également évités par le choix des granulométries des poudres A et B : grains plus gros 5 de la poudre B et grains plus fins 4 de la poudre A, comme cela a été noté ci-dessus.

Le résultat obtenu est schématisé sur la figure 2, après chauffage de la pièce 1 au four. A haute température, il se produit une infiltration par capillarité de la phase liquide dans la structure fibrée du matériau de la pièce 1 et il en résulte un effet mécanique d'accrochage par imprégnation du dépôt, correspondant dans la structure superficielle obtenue à une couche de liaison 6 présentant une épaisseur E et provenant de la fusion desdits grains 4 de la poudre A d'origine. Compte-tenu notamment d'un temps limité de maintien à haute température, il subsiste dans la couche externe 7 recouvrant la surface de la pièce 1 une structure 8 provenant de la fusion desdits grains 4 et qui forme une continuité avec la couche 6 tout en restant combinée avec les grains 5 provenant de la poudre B d'origine.

Un effet supplémentaire métallurgique d'accrochage du dépôt métallique s'ajoute au précédent. En effet, par la présence d'éléments réactifs Ti ou Zr dans la phase liquide infiltrée à haute température dans la structure fibrée du matériau composite de la pièce 1 et provenant de la poudre A d'origine, il se produit un phénomène de mouillage et de réaction métallurgique de la phase liquide métallique avec le matériau céramique de la pièce 1 au niveau de la couche 6 de liaison.

Des résultats en tout point satisfaisants ont ainsi été obtenus dans l'application particulière décrite ci-dessus avec une épaisseur de 0,3 mm de la couche externe 7 de dépôt et une profondeur d'imprégnation correspondant à l'épaisseur E de la couche 6 de liaison allant de 0,5 à 1 mm.

## Revendications

1. Procédé de réalisation d'un revêtement métallique sur une pièce en matériau composite comprenant des fibres SiC dans une matrice céramique à base de SiC comportant les étapes suivantes :
a) Mélange d'une poudre A de base, présentant la composition nominale suivante en pourcentages pondéraux :
Ni 53, Cr 14, Cu 20, Si 8, Ti 5,
une granulométrie comprise entre 40 et 50 µm et une température de liquidus de 1150°C, et d'une poudre B d'apport, présentant la composition nominale suivante en pourcentages pondéraux :
Cr 25, Ni 11, W 8 et Co complément à 100,
et une granulométrie comprise entre 50 et 150µm, la proportion pondérale de poudre B étant de 25 %, au moyen d'un liant organique connu en soi de manière à obtenir une pâte ;
b) nettoyage de la surface de la pièce à revêtir ;
c) mise en place de ladite pâte préparée à l'étape a) ;
d) chauffage au four, soit sous vide, soit sous atmosphère contrôlée, par montée à une température de 1230°C, cette température étant au moins égale à la température du liquidus de la poudre A et restant inférieure à la température de liquidus de la poudre B, suivie d'un maintien en palier à cette température durant un temps réduit, inférieur à 15 minutes puis refroidissement, de manière à obtenir un revêtement métallique comprenant une première couche (6) de liaison imprégnant une épaisseur E du matériau composite céramique et d'une deuxième couche externe (7) en continuité avec la première et comportant des grains (5) issus de la poudre B ladite épaisseur E étant de 1 à 4 fois l'épaisseur de la couche externe.

## Claims

1. Process for producing a metallic coating on a component made of a composite comprising SiC fibres in a SiC-based ceramic matrix, including the following steps:
a) mixing a base powder A, having the following nominal composition in percentages by weight:
Ni 53, Cr 14, Cu 20, Si 8, Ti 5,
a particle size lying between 40 and 50 µm and a liquidus temperature of 1150°C, and of an addition powder B, having the following nominal composition in percentages by weight:
Cr 25, Ni 11, W 8 and Co making up to 100,
and a particle size lying between 50 and 150 µm, the proportion by weight of powder B being 25%, by means of an organic binder known per se so as to obtain a paste;
b) cleaning the surface of the component to be coated;
c) putting on the said paste prepared in step a);
d) heating in a furnace, either under vacuum or in a controlled atmosphere, by raising the temperature to 1230°C, this temperature being at least equal to the liquidus temperature of the powder A and remaining below the liquidus temperature of the powder B, followed by a temperature hold at this temperature for a short time, less than 15 minutes, and then cooling, so as to obtain a metallic coating comprising a first tie layer (6) impregnating the composite ceramic to a thickness E, and an outer second layer (7), formed so as to be continuous with the first and containing particles (5) coming from the powder B, the said thickness E being from 1 to 4 times the thickness of the outer layer.

## Patentansprüche

1. Verfahren zur Herstellung einer metallischen Beschichtung auf einem Verbundmaterialkörper, der SiC-Fasern in einer keramischen Matrix auf einer SiC-Basis enthält, mit den Schritten:
a) Mischen eines Pulvers A als Grundlage, das aus der folgenden nominellen Zusammensetzung in Gew.-% besteht:
Ni 53, Cr 14, Cu 20, Si 8, Ti 5,
wobei die Körnung zwischen 40 und 50 µm und die Liquidus-Temperatur bei 1150°C liegt,
mit einem Pulver B als Zusatz, das die folgende nominelle Zusammensetzung in Gew.-% aufweist:
Cr 25, Ni 11, W 8 und Co auf 100 ergänzend,
und einer Körnung zwischen 50 und 150 µm,
wobei der Gewichtsanteil des Pulvers B 25 % beträgt, mittels eines an sich bekannten organischen Bindemittels dergestalt, daß eine Paste erhalten wird,
b) Reinigen der Oberfläche des zu beschichtenden Körpers,
c) Bereitstellen der im Schritt a) vorbereiteten Paste,
d) Erhitzen in einem Ofen, entweder unter Vakuum oder unter einem gesteuerten Luftdruck, durch Erhöhen auf eine Temperatur von 1230°C, wobei diese Temperatur mindestens gleich der Liquidus-Temperatur des Pulvers A ist und unter der Liquidus-Temperatur des Pulvers B bleibt, gefolgt von einer Aufrechterhaltung dieser Temperatur während einer geringen Zeitdauer, die unter 15 Minuten beträgt, danach ein Abkühlen, dergestalt, daß eine metallische Beschichtung erhalten wird, die eine erste Verbindungsschicht (6), die eine Dicke E des keramischen Verbundmateriales durchdringt, und eine zweite außen liegende Schicht (7) aufweist, die sich an die erste Schicht anschließt und Körner (5) aufweist, die vom Pulver B stammen, wobei die Dicke E das 1- bis 4-fache der Dicke der außen liegenden Schicht beträgt.
